Europäisches Patentamt

European Patent Office

Office européen des brevets

(19)

(11) Veröffentlichungsnummer: **0 140 415**
**B1**

(12) **EUROPÄISCHE PATENTSCHRIFT**

(45) Veröffentlichungstag der Patentschrift:
09.12.87

(51) Int. Cl.⁴: **C 03 C  25/02**

(21) Anmeldenummer: **84201340.1**

(22) Anmeldetag: **14.09.84**

(54) Optische Glasfaser mit einer ersten und einer zweiten Bedeckung.

(30) Priorität: **22.09.83  NL 8303252**

(43) Veröffentlichungstag der Anmeldung:
**08.05.85 Patentblatt 85/19**

(45) Bekanntmachung des Hinweises auf die Patenterteilung:
**09.12.87 Patentblatt 87/50**

(84) Benannte Vertragsstaaten:
**DE FR GB IT NL SE**

(56) Entgegenhaltungen:
**GB - A - 1 524 316
US - A - 4 105 284**

(73) Patentinhaber: **N.V. Philips' Gloeilampenfabrieken,
Groenewoudseweg 1, NL-5621 BA Eindhoven (NL)**

(72) Erfinder: **Janssen, Petrus Johannes, p/A INT.
OCTROOIBUREAU B.V. Prof. Holstlaan 6, NL-5656 AA
Eindhoven (NL)**
Erfinder: **Janssens, Peter Cornelis, p/A INT.
OCTROOIBUREAU B.V. Prof. Holstlaan 6, NL-5656 AA
Eindhoven (NL)**

(74) Vertreter: **Auwerda, Cornelis Petrus et al,
INTERNATIONAAL OCTROOIBUREAU B.V. Prof.
Holstlaan 6, NL-5656 AA Eindhoven (NL)**

**Beschreibung**

Die Erfindung bezieht sich auf eine optische Glasfaser mit einer ersten Bedeckung aus UV-gehärtetem Acrylatharz und einer fest darauf liegenden zweiten Bedeckung aus thermoplastischem Harz.

Bei der Herstellung optischer Fasern durch Ausziehen einer Vorform wird die Faser, unmittelbar nachdem diese gebildet ist, mit einer ersten Bedeckung (primary coating) versehen. Diese erste Bedeckung mit einer Dicke von etwa 60 μm dient dazu, die Integrität der Glasoberfläche der Faser beizubehalten. Die erste Bedeckung schützt die Glasoberfläche vor der Atmosphäre und vermeidet Kratzerbildung in der Glasoberfläche durch mechanischen Kontakt, beispielsweise beim Wikkeln der Faser auf eine Spule und beim Anbringen einer zweiten Bedeckung.

Bei der Verkabelung kann eine optische Faser relativ grossen Kräften ausgesetzt werden. Die erste Bedeckung bietet unter diesen Umständen einen unzureichenden Schutz vor mechanischer Beschädigung der optischen Faser.

Es ist deswegen üblich, auf der optischen Faser mit einer ersten Bedeckung eine zweite Bedeckung (secondary coating) anzubringen, die bei der Verkabelung und in dem Kabel vor mechanischer Belastung Schutz bietet. Die erste und zweite Bedeckung besteht meistens aus einem Kunststoff.

Die Werkstoffe, aus denen die erste und zweite Bedeckung der optischen Faser und die Faser selbst aufgebaut sind, weisen voneinander abweichende thermische Ausdehnungskoeffizienten auf. Für Quarzglas ($SiO_2$), aus dem die eigentliche Faser im wesentlichen besteht, beträgt dieser thermische Ausdehnungskoeffizient $50 \times 10^{-7}/°C$, für Kunststoffe liegt dieser Wert zwischen etwa 0,5 und $2 \times 10^{-4}/°C$.

Wenn die mit zwei fest anliegenden Bedeckungen versehene optische Faser einer sinkenden Temperatur ausgesetzt wird, übt insbesondere die relativ dicke zweite Bedeckung eine mit dem Temperaturrückgang zunehmende zusammendrükkende Kraft auf die optische Faser aus, die die optischen Eigenschaften der optischen Faser beeinträchtigt. Man hat aus diesem Grund bereits vorgeschlagen, die erste Bedeckung aus einer bei Temperaturrückgang weich bleibenden Schicht mit Pufferwirkung bestehen zu lassen. Eine derartige Pufferschicht vermeidet, dass die zweite Bedeckung eine mechanische Belastung auf die optische Faser ausüben oder zu dieser weiterleiten kann (siehe die GB-A-2065324). Diese Konstruktion weist jedoch den Nachteil auf, dass die optische Faser sich innerhalb der zweiten Bedeckung krümmt, wenn die zweite Bedeckung in der Längsrichtung stark schrumpft. Wenn diese Erscheinung auftritt, nimmt die Dämpfung durch Mikrokrümmungen («microbending») in der optischen Faser stark zu.

Es wurde auch vorgeschlagen, die mit einer ersten Bedeckung versehene Faser mit einer lokkeren zweiten Bedeckung in Form eines Kunststoffrohres zu versehen. Dabei dient der mit Luft oder mit einem Gel gefüllte freie Raum zwischen der ersten und zweiten Bedeckung dazu, zu vermeiden, dass eine mechanische Belastung zu der optischen Faser weitergeleitet wird. Dadurch wird jedoch nicht vermieden, dass beim Schrumpfen der zweiten Bedeckung die optische Faser sich in der Längsrichtung krümmt, auch ist die Innenseite des Kunststoffrohres fast nie völlig glatt. Alle diese Effekte können auch bei dieser Konstruktion dazu führen, dass bei Temperaturschwankungen, Vibrationen, denen das Kabel mit der optischen Faser ausgesetzt ist (beispielsweise durch Strassenverkehr), oder bei anderen Kräften auf das Kabel (beim Wickeln, Verlegen und dgl.) in der optischen Faser Mikrokrümmung auftritt (scharfe Biegungen in der optischen Faser, die sich über einige μm bis mm erstrecken). Mikrokrümmung kann, solange diese bestehen bleibt, zu grossen Strahlungsverlusten und zu Modenkopplung führen, wodurch die Übertragungseigenschaften der optischen Faser beeinträchtigt werden. Die Verwendung einer Gleitschicht zwischen der ersten und zweiten Bedeckung gibt in dieser Hinsicht zwar einige, jedoch keine wesentliche Verbesserung.

Es wurde auch vorgeschlagen, für die zweite Bedeckung Kunststoffe zu verwenden, deren elastische Eigenschaften sich in einem bestimmten Temperaturbereich nur wenig ändern. Auch von diesem Vorschlag lässt sich keine wesentliche Lösung des Problems erwarten. Die Zunahme der Dämpfung beträgt dabei immerhin noch 1 bis 2 dB/km bei einem Temperaturrückgang bis −50 °C (siehe in diesem Zusammenhang DE-Auslegeschrift 2723587).

Aus «UV cured resin coating for optical fibre cable» von G.L.Schief, p.1, Narasimhamm und S.M.O.H. in Journal of Radiation Curing, April 1982, Seite 11, ist eine optische Glasfaser mit einer ersten Bedeckung aus einem UV-gehärteten Acrylatharz und mit einer fest anliegenden zweiten Bedeckung aus einem UV-gehärteten Acrylatharz oder aus einem thermoplastischen Copolyester bekannt. Da nichts Weiteres mitgeteilt wird, muss angenommen werden, dass die Eigenschaften dieser Faser bei einer Normtemperatur von etwa 25 °C ermittelt worden sind.

Bei Untersuchungen, die zu der Erfindung geführt haben, wurde gefunden, dass bei der beschriebenen Konstruktion bei Temperaturschwankungen zwischen −60 und +80 °C eine grosse Zunahme der Dämpfung des Lichtsignals auftreten kann. Diese kann u.U. einige dB/km betragen. In der Praxis ist dies unzulässig.

Aus der GB-A-2065324 ist eine Konstruktion bekannt, die aus einer ersten Pufferschicht und einer zweiten glatten Schicht besteht, um die Extrusion einer dritten Schutzschicht zu ermöglichen. Die Pufferschicht bleibt bei dieser Konstruktion bei Temperaturrückgang weich, wodurch Mikro- und/oder Macrokrümmung bei niedriger Temperatur nicht vermieden wird, wie beim Zustandekommen der Erfindung festgestellt wurde.

Weiterhin wird noch in der Deutschen Patentschrift 3002363 vorgeschlagen, die zweite Bedekkung aus einem modifizierten Polyamid mit einem niedrigeren Elastizitätsmodul bestehen zu lassen. Dies weist den Nachteil auf, dass die Konstruktion mechanisch weniger Kräfte aufnehmen kann.

Die Erfindung hat nun die Aufgabe, eine optische Glasfaser mit einer ersten und einer zweiten, fest auf der ersten Bedeckung anliegenden Bedeckung zu schaffen, die den folgenden Anforderungen entspricht:

– die mit einer ersten Bedeckung versehene optische Faser muss handhabbar sein (Aufwickeln, Abwickeln usw.), ohne dass eine mechanische Beschädigung der Faser auftritt und die optischen Eigenschaften beeinträchtigt werden,

– die erste Bedeckung muss eine ausreichende Pufferwirkung aufweisen, so dass die optischen Eigenschaften nicht beeinträchtigt werden, wenn die Faser radialen Druckkräften ausgesetzt wird,

– die optischen Eigenschaften müssen in einem Temperaturbereich zwischen –60 und +80 °C bei Verwendung einer zweiten Bedeckung mit einem relativ hohen Elastizitätsmodul beibehalten bleiben.

Insbesondere hat die Erfindung die Aufgabe, eine optische Faser zu schaffen, bei der die intrinsischen optischen Eigenschaften nach dem Anbringen der Bedeckung möglichst beibehalten werden und wobei die Dämpfung bei Temperaturschwankungen zwischen –60 und +80 °C um nicht mehr als 0,5 dB/km und vorzugsweise um nicht mehr als 0,25 dB/km zu- bzw. abnimmt. Diese Aufgabe wird nach der Erfindung mit einer optischen Glasfaser gelöst, die dadurch gekennzeichnet ist, dass die erste Bedeckung mit einer Dicke von 50 bis 70 µm aus zwei Schichten aus UV-gehärtetem Acrylatharz aufgebaut ist, wobei das Dickenverhältnis der ersten zu der zweiten Schicht 0,5 bis 2 beträgt und die erste an der Faser anliegende Schicht bei 25 °C einen Elastizitätsmodul $\leq$ 5 N/mm$^2$ und die zweite Schicht bei 25 °C einen Elastizitätsmodul von 25–1500 N/mm$^2$ hat und beide Schichten bei –60 °C einen Elastizitätsmodul von > 1500 N/mm$^2$ aufweisen.

Vorzugsweise beträgt die Dicke der ersten Schicht 20 bis 40 µm und die der zweiten Schicht ebenfalls 20 bis 40 µm, wobei das gegenseitige Dickenverhältnis innerhalb der Grenzen 0,5 bis 2 im wesentlichen durch den Elastizitätsmodul der zweiten Schicht der ersten Bedeckung sowie der zweiten Bedeckung bestimmt wird. Dabei gilt, dass dieses Verhältnis um so kleiner gewählt werden muss, je grösser diese Elastizitätsmoduli sind.

In der Praxis stellt es sich heraus, dass besonders gute Resultate erzielt werden, wenn die Dicke der ersten und der zweiten Schicht 30 µm beträgt und der Elastizitätsmodul des UV-gehärteten Acrylatharzes der ersten Schicht 2–4 N/mm$^2$ bei 25 °C und der des UV-gehärteten Acrylatharzes der zweiten Schicht 250–500 N/mm$^2$ bei 25 °C beträgt.

Die erste und zweite Schicht der ersten Bedeckung können aus den aus der einschlägigen Literatur bekannten Acrylatharzen bestehen. Die in Betracht kommenden Acrylatharze enthalten meistens eine oder mehrere Arten von Oligomeren, Monomeren und einen Photoinitiator. Die Eigenschaften der UV-gehärteten Harze werden durch die verwendete Art von Oligomer und Monomer bestimmt; monofunktionelle Monomere liefern Harzschichten mit einem relativ niedrigen Elastizitätsmodul, multifunktionelle Monomere liefern Harzschichten mit einem grösseren Elastizitätsmodul. Chemisch betrachtet können die Harze beispielsweise Epoxy- und/oder Urethangruppen enthalten oder sie können auf Basis von Polyesterharzen aufgebaut sein. Bei Abkühlung auf –60 °C nimmt der Elastizitätsmodul der verwendeten Acrylatharze meistens bis zu einem Wert grösser als 1500 N/mm$^2$ zu. Dies gilt für die erste sowie die zweite Schicht der ersten Bedeckung. Acrylatharze mit dem gewünschten Elastizitätsmodul werden von mehreren Firmen vertrieben.

Die Erfindung bietet den Vorteil, dass eine zweite Bedeckung verwendet werden kann, die bei 25 °C einen Elastizitätsmodul von mindestens 1000 N/mm$^2$ aufweist.

Die zweite Bedeckung kann aus einem Polyamid, wie Polyamid 12 mit einem Elastizitätsmodul bei 25 °C von 1400 N/mm$^2$ (bei –60 °C von etwa 2000 N/mm$^2$) bestehen.

Andere geeignete Harze für die zweite Bedeckung sind beispielsweise Polyurethanelastomere, Polyvinylidenfluoride, Polybutylenterephthalat, Polychlortrifluorethen, Polypropen, Polyethen und Polyamide, wie Polyamid 11 und Modifikationen dieser Polymere. Die obenstehend und untenstehend angegebenen Elastizitätsmoduli sind die sogenannten 2,5 % secant Moduli.

Ausführungsbeispiele der Erfindung sind in der Zeichnung dargestellt und werden im folgenden näher beschrieben. Es zeigen:

Fig. 1 eine schematische Darstellung der Art und Weise, wie eine erste Bedeckung auf einer optischen Faser nach der Erfindung angebracht wird;

Fig. 2 einen Schnitt durch einen Extrusionskopf;

Fig. 3 einen Schnitt durch eine optische Glasfaser;

Fig. 4–6 graphische Darstellungen der Dämpfung in Abhängigkeit von der Temperatur.

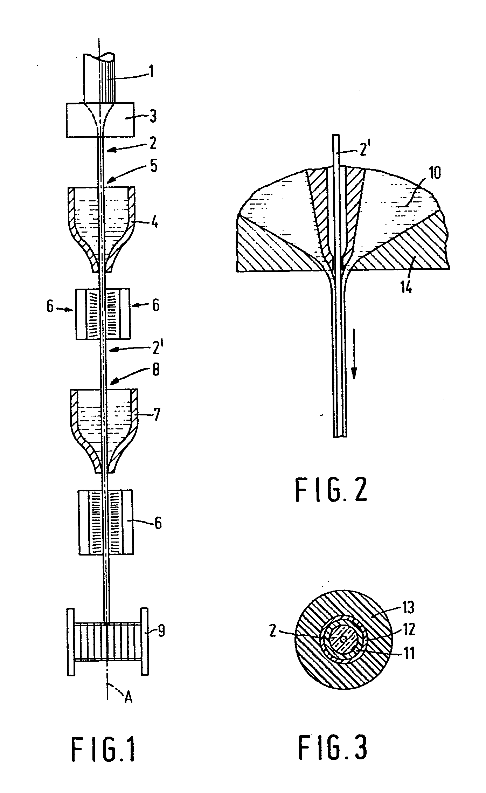

Aus einer Glasvorform 1 (Fig. 1) zum Ziehen von optischen Fasern, die beispielsweise nach einem der bekannten Verfahren erhalten sein kann, welche Verfahren als OVD, VAD, MCVD oder PCVD bezeichnet werden, wird eine Faser 2 gezogen. Dazu wird ein Ende der Vorform in einem Ofen auf die geeignete Ziehtemperatur erhitzt (durch 3 auf schematische Weise dargestellt). Die Faser 2 wird durch ein Gefäss 4 mit UV-härtbarem Acrylatharz 5 hindurchgeführt. Nach dem Verlassen des Gefässes 4 auf der Unterseite wird die mit einer dünnen Harzschicht versehene Faser 2 an einer Anzahl UV-Strahler 6 vorbeigeführt. Daraufhin wird die nun mit einer ersten UV-gehärteten Acrylatharzschicht versehene Faser durch ein zweites Gefäss 7 mit UV-härtbarem Acrylatharz 8 hindurchgeführt, wonach diese Schicht ebenfalls gehärtet wird, wonach die Faser 2' auf eine Haspel 9 gewickelt wird. Wenn die erste Schicht flüchtige Bestandteile enthält, wird es bevorzugt, diese aus der Schicht zu vertreiben, zum Beispiel durch eine Wärmebehandlung bei etwa 110 °C, bevor die zweite Schicht angebracht wird.

Die optische Faser 2' wird daraufhin mit einem Mantel aus thermoplastischem Kunststoff 13 bedeckt. Von der Extrusionsvorrichtung (Fig. 2) ist nur der Extrusionskopf 14 im Schnitt dargestellt.

Die optische Glasfaser 2 (Fig. 3) trägt eine erste Bedeckung, die aus den Schichten 11 und 12 besteht sowie eine zweite Bedeckung 13.

Ausführungsbeispiel 1

Eine optische Faser 2 mit einem Aussendurchmesser von 125 μm wurde unmittelbar nach dem Ziehen aus der Vorform 1 durch eine Bedeckungsvorrichtung 4 geführt, die ein Handelserzeugnis, nach Angabe des Herstellers aus einem Gemisch aus acrylierten Urethanoligomeren und Acrylatmonomeren (Elastizitätsmodul nach UV-Härtung 4 N/mm$^2$ bei 25 °C) bestehend, enthielt. Nach dem UV-Härten wurde die Faser durch eine Vorrichtung 7 hindurchgeführt, die ein Handelserzeugnis, nach Angabe des Herstellers bestehend aus einem Gemisch aus acrylierten Epoxyoligomeren und Acrylatmonomeren (Elastizitätsmodul in UV-gehärtetem Zustand 700 N/mm$^2$ bei 25 °C), enthielt. Draufhin wurde die Faser durch eine Extrusionsvorrichtung hindurchgeführt und mit Polyamid 12 (einem Erzeugnis aus Lauryllactam) bedeckt.

Die auf diese Weise erhaltene erste Bedeckung bestand nun aus einer ersten Schicht 11 aus einem gehärteten Acrylatharz mit einer Nenndicke von 25 μm und mit einem Elastizitätsmodul von 4 N/mm$^2$ bei 25 °C sowie einer zweiten Schicht 12 mit einer Nenndicke von 30 μm und einem Elastizitätsmodul von 700 N/mm$^2$ bei 25 °C, wobei die beiden Schichten bei –60 °C einen Elastizitätsmodul von etwa 2000 N/mm$^2$ aufweisen. Die fest anliegende zweite Bedeckung 13 bestand aus Polyamid 12 mit einer Schichtdicke von 300 μm und mit einem Elastizitätsmodul von 1400 N/mm$^2$ bei 25 °C und von 1800 N/mm$^2$ bei –50 °C. Bei zyklischem Temperaturwechsel zwischen –60 °C und +80 °C betrug während und nach 6 Zyklen die Änderung in der Dämpfung weniger als 0,1 dB/km.

Ausführungsbeispiel 2

Auf dieselbe Art und Weise wie in dem Beispiel 1 wurde eine optische Glasfaser 2 mit einer ersten Bedeckung versehen, die aus einer ersten Schicht 11 aus einem UV-gehärteten Handelserzeugnis besteht, nach Angabe des Herstellers bestehend aus einem Gemisch aus acrylierten Urethanoligomeren und Acrylatmonomeren (Elastizitätsmodul nach UV-Härtung 4 N/mm$^2$ bei 25 °C) mit einer Dicke von 30 μm und mit einem Elastizitätsmodul von 4 N/mm$^2$ sowie einer zweiten Schicht aus einem UV-gehärteten Handelserzeugnis, nach Angabe des Herstellers bestehend aus einem Gemisch aus acrylierten Urethan- und Epoxyoligomeren und Acrylatmonomeren mit einem Elastizitätsmodul von 350 N/mm$^2$ bei 25 °C.

Die zweite Bedeckung 13 bestand aus Polyamid 12, wie in dem Beispiel 1, mit derselben Dicke. Bei 6 Zyklen zwischen –60 °C und +80 °C betrug während und nach 6 Zyklen die Änderung in der Dämpfung weniger als 0,1 dB/km.

Ausführungsbeispiel 3

Auf dieselbe Art und Weise wie in dem Beispiel 1 wurde eine optische Glasfaser mit einer ersten Bedeckung versehen, die aus einer ersten Schicht 11 mit einer Dicke von 40 μm aus einem UV-gehärteten Handelserzeugnis, nach Angabe des Herstellers bestehend aus einem Gemisch aus acrylierten Urethanoligomeren und Acrylatmonomeren (E 25 °C: 4 N/mm$^2$), und einer zweiten Schicht aus einem UV-gehärteten Handelserzeugnis, nach Angabe des Herstellers bestehend aus einem Gemisch aus acrylierten Epoxy- und Urethanoligomeren und Acrylatmonomeren mit einer Dicke von 20 μm (E 25 °C: 35 N/mm$^2$). Die zweite Bedeckung 13 bestand aus Polyamid 12 wie in dem Beispiel 1, mit derselben Dicke. Nach 2 Zyklen zwischen –60 °C und +80 °C betrug die Änderung in der Dämpfung bereits weniger als 0,1 dB/km.

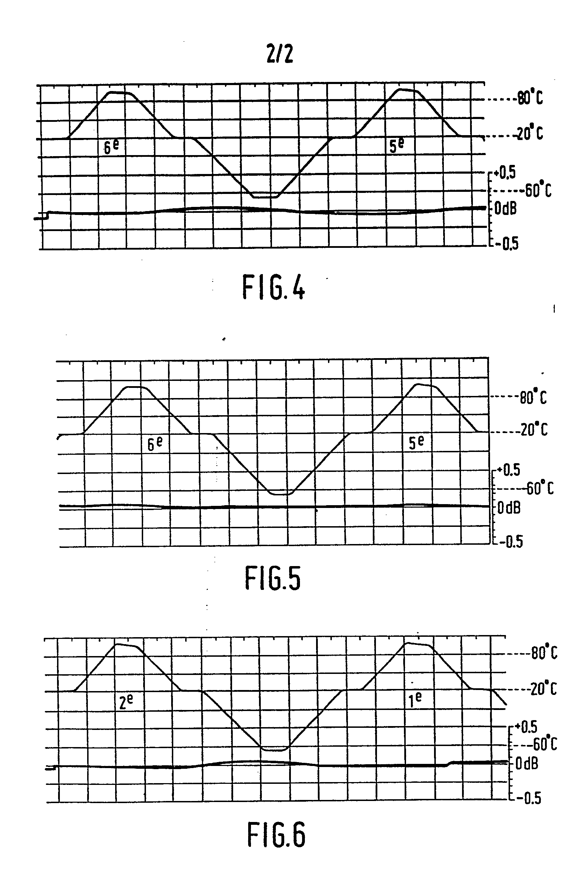

Fig. 4 zeigt eine Grafik, die den 5. und 6. Temperaturzyklus darstellt, dem eine Faser nach dem Ausführungsbeispiel 1 ausgesetzt wurde. Auf der horizontalen Achse ist die Zeit in Stunden aufgetragen. Die dünne Linie bezeichnet den Temperaturverlauf, die dicke Linie die Änderung in der Dämpfung. Am Anfang des Versuches betrug die Dämpfung 2,4 dB/km bei 850 nm.

Fig. 5 zeigt eine ähnliche Grafik für die Faser nach dem Ausführungsbeispiel 2. Am Anfang des Versuches betrug die Dämpfung 2,5 dB/km bei 850 nm.

Fig. 6 zeigt eine ähnliche Grafik für die Faser nach dem Ausführungsbeispiel 3 (1. und 2. Zyklus). Am Anfang des Versuches betrug die Dämpfung 2,7 dB/km bei 850 nm.

## Patentansprüche

1. Optische Glasfaser mit einer ersten Bedeckung aus UV-gehärtetem Acrylat und einer fest daran anliegenden zweiten Bedeckung aus einem thermoplastischen Harz, dadurch gekennzeichnet, dass die erste Bedeckung mit einer Dicke von 50 bis 70 μm aus zwei Schichten aus UV-gehärtetem Acrylatharz aufgebaut ist, wobei das Dickenverhältnis der ersten zu der zweiten Schicht 0,5 bis 2 beträgt und wobei die erste an der Faser anliegende Schicht bei 25 °C einen Elastizitätsmodul ≤ 5 N/mm$^2$ und die zweite Schicht bei 25 °C einen Elastizitätsmodul von 25 bis 1500 N/mm$^2$ hat und beide Schichten bei –60 °C einen Elastizitätsmodul > 1500 N/mm$^2$ aufweisen.

2. Optische Faser nach Anspruch 1, dadurch gekennzeichnet, dass die erste Bedeckung aus einer ersten Schicht mit einer Dicke von 20 bis 40 μm und einer zweiten Schicht mit einer Dicke von 20 bis 40 μm aufgebaut ist.

3. Optische Faser nach Anspruch 1, dadurch gekennzeichnet, dass die erste Bedeckung aus zwei Schichten aus UV-gehärtetem Acrylatharz aufgebaut ist, wobei die Dicke der ersten und der

zweiten Schicht 30 μm ± 5 μm beträgt und die erste an der Faser anliegende Schicht bei 25 °C einen Elastizitätsmodul von 2 bis 4 N/mm² und die zweite Schicht bei 25 °C einen Elastizitätsmodul von 250 bis 500 N/mm² aufweist.

## Claims

1. An optical glass fibre comprising a primary coating of UV-cured acrylate and a secondary coating of a thermoplastic resin in intimate contact therewith, characterized in that the primary coating having a thickness of 50 to 70 μm is constructed from two layers of UV-cured acrylate resin, the thickness ratio of the first to the second layer being 0.5 to 2, and the first layer engaging the fibre has a modulus of elasticity $\leq 5$ N/mm² at 25 °C and the second layer has a modulus of elasticity from 25 to 1500 N/mm², and both layers have a modulus of elasticity of $> 1500$ N/mm² at −60 °C.

2. An optical fibre as claimed in claim 1, characterized in that the primary coating is constructed from a first layer having a thickness from 20 to 40 μm and a second layer having a thickness from 20 to 40 μm.

3. An optical fibre as claimed in claim 1, characterized in that the primary coating is constructed from two layers of UV-cured acrylate resin, in which the thickness of the first and the second layer is 30 μm ± 5 μm and the first layer engaging the fibre has a modulus of elasticity from 2 to 4 N/mm² at 25 °C and the second layer has a modulus of elasticity from 250 to 500 N/mm² at 25 °C.

## Revendications

1. Fibre en verre optique présentant un premier revêtement en acrylate durci à l'aide de rayonnement ultraviolet et un deuxième revêtement recouvrant étroitement le premier revêtement et constitué par une résine thermoplastique, caractérisé en ce que le premier revêtement d'une épaisseur de 50 à 70 μm est constitué par deux couches en résine d'acrylate durcie à l'aide de rayonnement ultraviolet, le rapport entre les épaisseurs des première et deuxième couches étant de 0,5 à 2 et la première couche, qui entoure la fibre, présentant à 25 °C un module d'élasticité $\leq 5$ N/mm² et la deuxième couche à 25 °C un module d'élasticité de 25 à 1500 N/mm² et les deux couches présentent un module d'élasticité supérieur à 1500 N/mm² à −60 °C.

2. Fibre optique selon la revendication 1, caractérisée en ce que le premier revêtement est constitué par une première couche d'une épaisseur de 20 à 40 μm et par une deuxième couche d'une epaisseur de 20 à 40 μm.

3. Fibre optique selon la revendication 1, caractérisée en ce que le premier revêtement est constitué par deux couches en résine d'acrylate durcie à l'aide de rayonnement ultraviolet, l'épaisseur des première et deuxième couches étant de 30 μm ± 5 μm et la première couche entourant la fibre présentant, à 25 °C, un module d'élasticité de 2 à 4 N/mm² et la deuxième couche présentant, à 25 °C, un module d'élasticité de 250 à 500 N/mm².

FIG.1

FIG.2

FIG.3

2/2

FIG. 4

FIG. 5

FIG. 6